(19) **Europäisches Patentamt**

**European Patent Office** (11) Veröffentlichungsnummer: **0 054 232 B1**

**Office européen des brevets**

(12) # EUROPÄISCHE PATENTSCHRIFT

(45) Veröffentlichungstag der Patentschrift: **30.04.86**

(51) Int. Cl.⁴: **B 65 D 77/06, G 01 F 11/08**

(21) Anmeldenummer: **81110129.4**

(22) Anmeldetag: **04.12.81**

(54) Einwegverpackung für Flüssigkeiten.

(30) Priorität: **08.12.80 CH 9035/80**

(43) Veröffentlichungstag der Anmeldung:
**23.06.82 Patentblatt 82/25**

(45) Bekanntmachung des Hinweises auf die Patenterteilung:
**30.04.86 Patentblatt 86/18**

(84) Benannte Vertragsstaaten:
**AT BE DE FR GB NL SE**

(56) Entgegenhaltungen:
**DE - C - 944 057**
**US - A - 2 647 661**
**US - A - 3 199 742**

(73) Patentinhaber: **Jacobs Suchard AG, Klausstrasse 4/6, CH-8008 Zürich (CH)**

(72) Erfinder: **Hampel, Hans-Joachim, Falkensteiner Strasse 1, D-6231 Niederhöchstadt (DE)**
Erfinder: **Scondo, Ludwig, Hedwig-Dransfeld Strasse 5, D-6000 Frankfurt/Main 90 (DE)**
Erfinder: **Stahl, Jürgen, Jucho-Strasse 3, D-6000 Frankfurt/Main (DE)**
Erfinder: **Wegner, Wilhelm, Sondershausen Strasse 61, D-6000 Frankfurt/Main (DE)**
Erfinder: **Bonne, Harry, Dipl.-Ing, In der Appenhalten 26, CH-8706 Meilen (CH)**

(74) Vertreter: **Patentanwälte Schaad, Balass & Partner, Dufourstrasse 101 Postfach, CH-8034 Zürich (CH)**

## Beschreibung

Die Erfindung betrifft eine Einwegverpackung für Flüssigkeiten nach dem Oberbegriff von Anspruch 1. Für die Versorgung von Kaffeeautomaten mit Kaffee in Extraktiorm ist es schon bekannt, anstelle eines nachfüllbaren Behälters, der Teil des Automaten bildet, eine Einwegverpackung der vorgenannten Art zu verwenden. Der Unterhalt des Automaten vereinfacht sich dadurch erheblich, dass die Teile, die einer Reinigung bedürfen, durch die Einwegverpackung gebildet werden, wobei durch das Einsetzen der Einwegverpackung auch die Nachfüllarbeit verrichtet wird.

Beim Einsetzen der vollen Verpackung in den Automaten werden die der Dosierkammer vor- und nachgeschalteten Teile des Entnahmekanales zwischen Abquetschmechanismen verbracht, während an einen in die Dosierkammer mündenden Stutzen der Verpackung eine Leitung für erhitztes Wasser angeschlossen wird, die von einem Ventil beherrscht ist. Um die unerwünschte Entleerung der Verpackung beim Transport, der Lagerung und beim Einsetzen in den Automaten zu verhindern, sind die Auslassöffnung und der Wasserstutzen durch nach dem Einsetzen entfernbare Verschlüsse abgesperrt.

Bei der Entnahme von Flüssigkeit aus dem Speicherraum der Verpackung ist der der Dosierkammer nachgeschaltete Abquetschmechanismus geschlossen, währenddem der vorgeschaltete Abquetschmechanismus geöffnet ist. Die Dosierkammer füllt sich unter dem statischen Druck der Flüssigkeit im Speicherraum. Für die Abgabe der dosierten Menge wird der vorgeschaltete Abquetschmechanismus geschlossen, während der nachgeschaltete Abquetschmechanismus sowie das Ventil der Wasserleitung geöffnet werden.

Die bekannte Verpackung hat einerseits den Nachteil, dass der Wasserstutzen beim Einsetzen der Einwegverpackung in den Automaten durch Entfernen des Verschlusses geöffnet werden muss. Dabei ist nicht zu vermeiden, dass aus diesem Extraktflüssigkeit ausläuft und den Automaten verunreinigt.

Andererseits besteht der Nachteil, dass mit zunehmender Entleerung des Speicherraumes die Füllzeit des Dosierraumes, die infolge der hohen Viskosität der Extraktflüssigkeit ohnehin relativ lang ist, zunimmt. Eine im Automaten vorgesehene Zeitsteuerung muss deshalb auf die längstmögliche Füllzeit des Dosierraumes eingestellt werden. Darüberhinaus kann ein neuer Dosiervorgang nicht eingeleitet werden, bevor nicht auch die vorgesehene Wassermenge den Dosierraum durchströmt hat. Die Leistungsfähigkeit eines mit derartigen Verpackungen bedienten Automaten ist dementsprechend begrenzt.

Den Nachteil der mit zunehmender Entleerung des Speicherraumes zunehmend längeren Füllzeit der Dosierkammer weist auch die in der US-PS 2 647 661 beschriebene Einwegverpackung für Flüssigkeiten auf. Sie weist einen aus einem zusammenpressbaren Beutel bestehenden Speicherraum auf, der in einer starren Verpackungsschachtel angeordnet ist. Für die Flüssigkeitsentnahme aus dem Speicherraum wird der Deckel dieser Schachtel entfernt. Dann kommt eine horizontale Platte direkt auf den zusammenpressbaren Beutel zu liegen. Diese Platte ruht während des ganzen Vorganges mit gleichbleibendem Gewicht auf dem zusammenpressbaren Beutel, dessen Höhe während der Entleerung laufend abnimmt, währenddem die Standfläche des Beutels und die starre Verpackungsschachtel unverändert bleiben. Dadurch bewegt sich die Platte mit zunehmender Entleerung des Beutels nach unten, so dass ein mit ihr verbundener Stössel die Höhe des Flüssigkeitsvorrates im Beutel anzeigt. Die Entleerungsgeschwindigkeit ist hier abhängig vom - im unteren Teil des Beutels - herrschenden Druck, der sich aus dem gleichbleibenden Druck der Platte und aus dem variierenden Flüssigkeitsdruck oder der Flüssigkeitshöhe zusammensetzt. Dadurch wird, wie bereits weiter oben ausgeführt ist, die zum Füllen der Dosierkammer erforderliche Zeit, die infolge der hohen Viskosität von Extraktflüssigkeiten ohnehin relativ lang ist, zunehmend. Damit ist der bereits geschilderte Nachteil verbunden, dass die Steuerung der Füllzeit auf die ungünstigste Bedingung, d.h. auf die Verhältnisse mit einem fast leeren Beutel, eingestellt werden muss. Es vergeht deshalb relativ viel Zeit, bis ein mit der bekannten Verpackung gefüllter Verkaufsautomat nach einer ersten Flüssigkeitsentnahme wieder betriebsbereit ist. Im übrigen besitzt diese bekannte Einwegverpackung ein,der Dosierkammer nachgeschaltetes,als im Entnahmekanal aus Gummi festgehaltener Zapfen ausgebildetes Ueberdruckventil.

Aufgabe der Erfindung ist die Schaffung einer Einwegverpackung für Flüssigkeiten, welche eine rasche Dosierung und Entnahme von Flüssigkeit zulässt. Erfindungsgemäss wird diese Aufgabe durch die Merkmale des Kennzeichens von Anspruch 1 gelöst.

Durch die seitliche Zusammenpressbarkeit des Speicherraumes der erfindungsgemässen Einwegverpackung wird die Grundfläche des Speicherraumes im Laufe der Entleerung verkleinert. Dadurch kann die Höhe der Flüssigkeit und damit der Flüssigkeitsdruck annähernd konstant gehalten werden. Es ist deshalb mit einer geeigneten Einrichtung möglich, aus dem Speicherraum die Flüssigkeit zwangsweise zu entnehmen und die Dosierkammer in einem vom Füllzustand des Speicherraumes unabhängigen, für eine gegebene Portionsgrösse konstanten Zeitabschnitt zu füllen. Dank der Faltbarkeit der Schmalseiten ist die Auspressbarkeit des Speicherraumes in der für den Transport und die Lagerung dienenden Verpackungsschachtel ohne Oeffnen der Schachtel und ohne direkte Einwirkung einer Entnahmeeinrichtung auf den den Speicherraum begrenzenden Beutel gewährleistet. Durch die Auspressbarkeit der Dosierkammer kann diese in kürzerer Zeit entleert werden, als wenn das dosierte Gut herausgespült werden müsste. Die Verpackung erlaubt deshalb, eine gegebene Anzahl von Flüssigkeitsportionen in einem kürzeren Zeitraum abzugeben. Hinzu kommt, dass das Auswechseln der Einwegverpackungen weder ein Abtrennen von der bzw. ein Anschliessen an die Wasserleitung notwendig macht, womit der Auswechselvorgang im Automaten vereinfacht werden kann.

Gemäss einer bevorzugten Ausgestaltung der erfindungsgemässen Einwegverpackung ist der Verschluss, welcher den Auslass während der Lagerung und dem Transport versperrt, der gleiche wie derjenige, welcher die Dosierkammer während des Betriebes beherrscht. Dies gelingt erfindungsgemäss dadurch, dass der Entnahmekanal ein der Dosierkammer nachgeschaltetes, in Richtung des Auslasses öffnendes Ueberdruckventil besitzt. Damit vereinfacht sich nicht nur der Auswechselvorgang der Verpackung im Automaten weiter, indem das Entfernen eines besonderen Verschlusses und ein unerwünschtes Austreten von Flüssigkeit aus dem Entnahmekanal nach dem Entfernen dieses Verschlusses entfällt. Vielmehr macht die Ausbildung des Verschlusses als Ueberdruckventil zusammen mit der Auspressbarkeit der Dosierkammer eine Steuerung des Verschlussorganes im Betrieb überflüssig.

Gemäss einer weiteren bevorzugten Ausgestaltung der erfindungsgemässen Einwegverpackung ist der Speicherraum durch einen Beutel aus Folienmaterial begrenzt, an den ein den Entnahmekanal bildender Schlauch aus gummielastischem Material angeschlossen ist, wobei das Folienmaterial des Beutels die Auskleidung der Verpackungsschachtel bildet.

Nachfolgend sind die erfindungsgemässe Einwegverpackung und eine Entnahmeeinrichtung hierzu in je einem Ausführungsbeispiel anhand der Zeichnungen näher erläutert. Es zeigen:

Fig. 1 die Einwegverpackung nach dem Ausführungsbeispiel im Aufriss in betriebsbereitem Zustand;

Fig. 2 in vergrössertem Massstab ein Schnitt entlang Linie II - II in Fig. 1;

Fig. 2a und 2b ein Detail aus Fig. 2 im Aufriss bzw. im Grundriss; und

Fig. 3 eine Entnahmeeinrichtung schematisch im Vertikalschnitt mit eingesetzter Einwegverpackung.

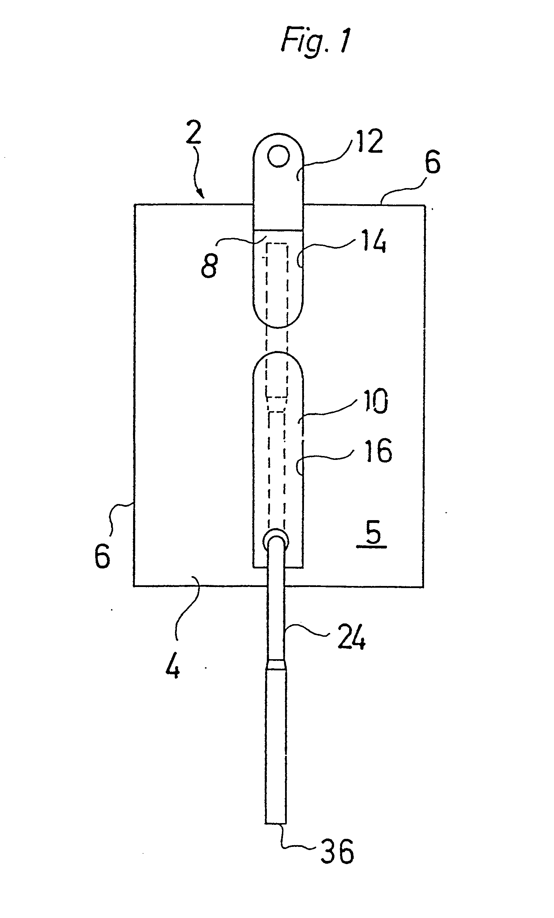

Mit 2 ist in der Zeichnung allgemein eine Einwegverpackung bezeichnet, deren äussere Form zumindest bei Transport und Lagerung durch eine flache rechteckige Schachtel 4.aus Karton bestimmt ist. Die Schachtel 4 besitzt auf ihrer mit 5 bezeichneten Breitseite längliche Oeffnungen 8 und 10 sowie einen Aufhängelappen 12, der aus der Breitseite 5 entlang einer in dieser gebildeten Perforationslinie 14 der Oeffnung 8 herausgetrennt und um 180° umgebogen ist. Ein nicht dargestellter, entlang der Perforationslinie 16 abgerissener Streifen verschliesst die Oeffnung 10 während Transport und Lagerung. Die Schachtel 4 enthält eine Auskleidung in Form eines Beutels l8 aus Folienmaterial, der rial besteht vorzugsweise aus mehreren Schichten und weist mindestens eine Kunststoffschicht und mindestens eine Metallschicht auf, wobei die letztere eine Diffusionssperre und die Kunststoffschicht die innerste Schicht am Beutel 18 bildet. Mit dem Beutel 18 ist ein Stutzen 22 flüssigkeitsdicht verbunden, an welchen ein Schlauch 24 aus gummielastischem Material mittels eines am letzteren angeformten Kupplungsstückes 26 angeschlossen ist. Das Kupplungsstück 26 ist durch einen Sicherheitsring 28 auf dem Stutzen 22 gehalten. Der Schlauch 24 ist vor dem Oeffnen der Schachtel 4 in derem Inneren verlegt, etwa wie in Fig. 1 in strichpunktierten Linien dargestellt ist. Dementsprechend behindert dieser Schlauch, obwohl er Teil der Einwegverpackung bildet, Transport und Lagerung derselben nicht.

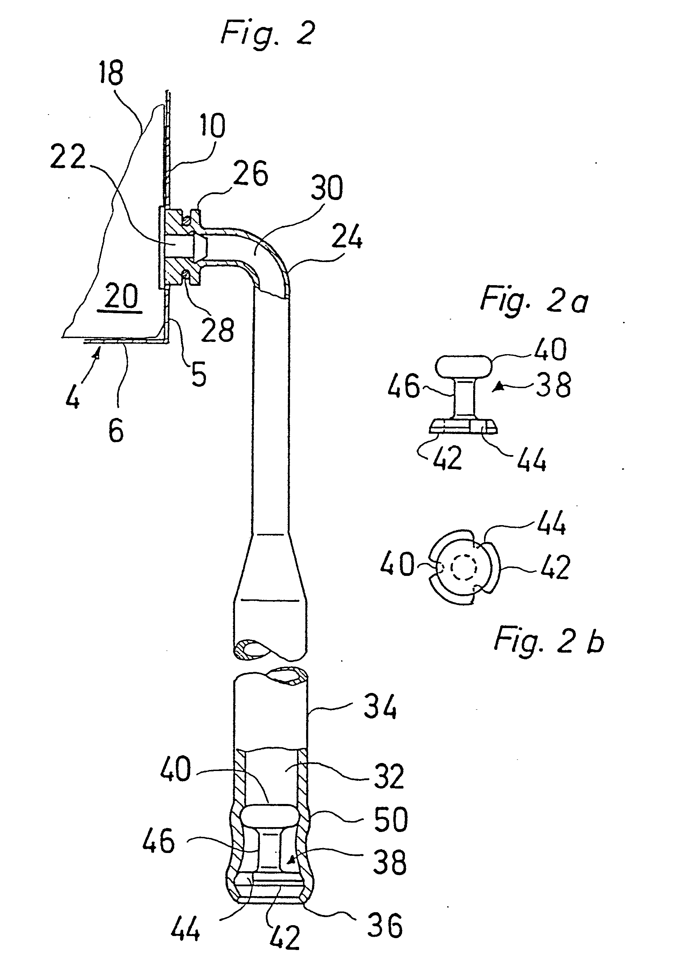

Für die Entnahme des Inhaltes, d.h. der Flüssigkeit aus dem Beutel 18, kann der Schlauch 24 durch die aufgerissene Oeffnung 10 aus der Schachtel 4 so herausgezogen werden, dass er die in Fig. 1 (in ausgezogenen Linien) und Fig. 2 dargestellte Lage einnimmt. Jedenfalls enthält der Schlauch 24 einen über den Stutzen 22 mit dem Speicherraum 20 verbundenen Entnahmekanal 30 sowie eine Dosierkammer 32 in einem Schlauchabschnitt 34 mit einem gegenüber dem Durchmesser des Schlauches in seiner übrigen Länge erweiterten Durchmesser. Schliesslich begrenzt der Schlauch 24 in seinem Abschnitt 34 einen Auslass 36 am Ende des Entnahmekanales 30 und enthält einen zwischen Dosierkammer 32 und Auslass 36 angeordneten Einsatz 38.

Der Einsatz 38 umfasst einen Zapfen 40 mit kreisförmigem Querschnitt und abgerundetem Profil, einen ebenfalls kreisförmigen Fussteil 42 mit grösserem Durchmesser als der Zapfen 40, wobei der Fussteil an seinem Umfang verteilt angeordnete Durchbrüche 44 aufweist, sowie einen Schaft 46 von gegenüber dem Zapfen 40 reduziertem Durchmesser, welcher den letzteren mit dem Fussteil 42 starr verbindet. Zusammen mit der Wandung des Schlauches 24 bildet der Zapfen 40 ein Ueberdruckventil, indem der Schlauch den Zapfen mit Vorspannung umgreift. Andererseits ist der Zapfen 40 gegen Verschiebung im Schlauch 24 dadurch gesichert, dass der Fussteil 44 infolge seines grösseren Aussendurchmessers vom Schlauch 24 mit grösserer Vorspannung als der Zapfen 40 übergriffen wird. Wird in der in der Dosierkammer 32 enthaltenen Flüssigkeit ein Druck aufgebaut, der in Richtung des Speicherraumes 20 nicht abbaubar ist, so wird der Schlauch von der Oberfläche des Zapfens abgehoben, wenn der entstehende Druck ein durch die Vorspannung des Schlauches bestimmtes Mass überschritten hat. In der Dosierkammer 32 enthaltene Flüssigkeit kann demnach dem Schaft 46 entlang und durch die Durchbrüche 44 im Fussteil 42 ungehindert zum Auslass 36 abströmen. Die grössere Vorspannung des Schlauches am Fussteil 42 verhindert eine Verschiebung des Einsatzes 38 bevor sich das Ueberdruckventil 50 geöffnet hat. Je nach den Abmessungen des Einsatzes 38 und des Schlauchabschnittes 34 sowie der Elastizität des Schlauches selbst ist es möglich, den Ansprechdruck des Ueberdruckventiles 50 zwischen 1,5-6,0 bar zu wählen. Alternativ oder zusätzlich zu einem grösseren Durchmesser kann der Fussteil 44 von einem (nicht dargestellten) Wulst untergriffen sein, der an der Innenseite des Schlauches in der Nachbarschaft des Auslasses 36 vorgesehen ist, um den Einsatz 38 zu sichern.

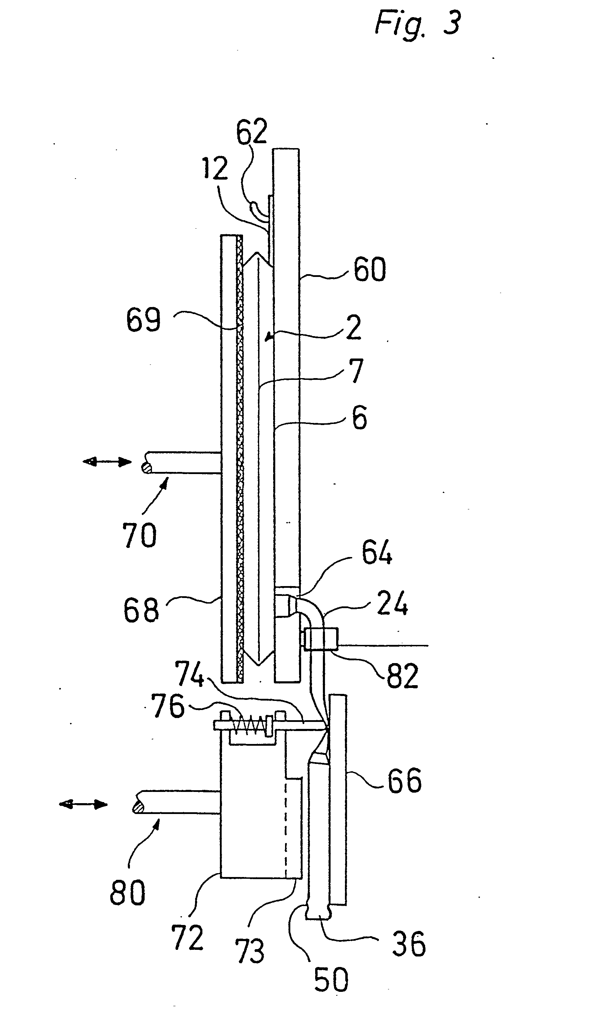

In der in Fig. 3 schematisch dargestellten Entnahmeeinrichtung ist eine Einwegverpackung der vorstehend erläuterten Art im entnahmebereiten Zustand dargestellt. Die Entnahmeeinrichtung umfasst eine Basisplatte 60, die eine nicht dargestellte Kühleinrichtung besitzen kann, und an welcher an einem Haken 62 die Einwegverpackung 2 vermittels des Aufhängelappens 12 befestigt ist.

Schliesslich umfasst die Entnahmeeinrichtung auch eine Ueberwachungsvorrichtung, die ein den Schlauch 24 oberhalb des Abquetschbolzens 74 übergreifendes, z.B. kapazitives Geberelement 82 aufweist.

Der Auslass 36 der Einwegverpackung 2 ist gegen eine Entnamestation (nicht dargestellt) der Entnahmeeinrichtung gerichtet, an welcher normalerweise ein Trinkgefäss, z.B. ein Becher aufgestellt ist. Bildet die Entnahmeeinrichtung Teil eines Getränke-Automaten, z.B. eines Kaffeeautomaten, so münden an der Entnahmestation noch weitere Abgabeorgane aus, z.B. für heisses Wasser, Milch und/oder Rahm sowie Zucker. Um nun aus der Einwegverpackung 2 bzw. deren Speicherraum 20 Flüssigkeit, z.B. Kaffeeextrakt in dosierter Menge für die Zubereitung einer Becherfüllung zu entnehmen, arbeitet die Entnahmeeinrichtung in der nachfolgend beschriebenen Weise.

In der Ausgangslage der Entnahmeeinrichtung ist der Anpresskolben gegenüber der in Fig. 3 dargestellten Zwischenstellung zurückgezogen und zwar soweit, dass der Abquetschbolzen 74 den Schlauch 24 freigegeben hat. Der Entnahmekanal 30 ist deshalb zwischen Speicherraum 20 und Dosierkammer 32 offen. Unter dem im Speicherraum 20 herrschenden konstanten Innendruck, der von der Druckerzeugungsplatte 68 aufgebracht wird und vorzugsweise zwischen 0,1 und 0,3 bar beträgt, wird dementsprechend die Dosierkammer 32 gefüllt. Infolge seines erheblich höheren Ansprechdruckes kann das Ueberdruckventil 50 jedoch keine Flüssigkeit in Richtung des Auslasses 36 entlassen. An den Füllvorgang der Dosierkammer 32 anschliessend wird durch die Antriebsmittel 80 der Anpresskolben 72 in Richtung der Gegenplatte 66 verschoben. Dabei wird die in Fig. 3 dargestellte Lage durchfahren, in welcher der Abquetschbolzen 74 den Entnahmekanal 30 oberhalb der Dosierkammer 32 abgesperrt hat, und zwar bevor der Auspresskolben 72 begonnen hat, auf den Schlauchabschnitt 34 einzuwirken. Wenn der Auspresskolben 72 beginnt, den Schlauchabschnitt 34 zusammenzudrücken, so baut sich demzufolge in der Dosierkammer 32 ein über dem Fülldruck liegender Innendruck auf, der den Ansprechdruck des Ueberdruckventiles 50 übersteigt. Dementsprechend wird aus der Dosierkammer 32 Flüssigkeit in Richtung des Auslasses 36 verdrängt, bis der Auspresskolben das Ende seines Auspresshubes (Bewegung nach rechts in Fig. 3) zurückgelegt hat und der Ueberdruck in der Dosierkammer abgebaut ist.

Beim Rückzug des Auspresskolbens 72 wird der Schlauchabschnitt 34 entlastet, wobei sich in der Dosierkammer 32 der Druck unter den Fülldruck abbaut, bevor nach urchfahren der in Fig. 3 gezeigten Lage der Abquetschbolzen 74 den Schlauch 24 freigibt und der Entnahmekanal 30 offen ist. Unter dem Einfluss des Fülldruckes im Speicherraum 20 wird nun die Dosierkammer 32 sehr rasch wieder mit Flüssigkeit gefüllt. Die Entnahmeeinrichtung ist damit für einen weiteren Entnahmevorgang bereit.

Um eine Entnahme von Flüssigkeit aus dem Beutel 18 bis zu dessen vollständiger Entleerung sowie die Füllung der Dosierkammer 32 unter konstantem Druck trotz Steifigkeit der Wände der Schachtel 24 zu ermöglichen, weist die letztere in ihren Schmalseiten 6 etwa mittig angeordnete und in Längsrichtung verlaufende Längsfalze 7 auf. Entlang diesen Längsfalzen können demzufolge die Schmalseiten am ganzen Schachtelumfang ausknicken. Schliesslich weist die Druckerzeugungsplatte 68 auf ihrer der Basisplatte 60 zugekehrten Seite eine elastische Ausgleichsschicht 69 auf. Die Ausgleichsschicht 69 ist deshalb in der Lage, in beschränktem Ausmass Unebenheiten z.B. im Bereich der Schachtelränder auszugleichen. Demzufolge können sich, auch wenn die Schachtel 4 zusammengepresst ist, keine Taschen im Beutel bilden, aus denen die Flüssigkeit nicht ausgepresst werden könnte.

Vermag die im Beutel enthaltene Flüssigkeit bei einem Entnahmevorgang die Dosierkammer 32 nicht mehr soweit zu füllen, dass auch der Entnahmekanal 24 bis in die Nähe des Kupplungsstückes 26 noch vollbleibt, so spricht das Geberelement 82 der Ueberwachungsvorrichtung an und blockiert z.B. die Antriebsmittel 80. Der Auspresskolben 72 verbleibt deshalb in der Ausgangslage. Im weiteren kann im Falle eines Geldautomaten die Geldannahme durch die Ueberwachungseinrichtung blockiert werden und solange blockiert bleiben, bis das Geberelement 82 wieder das Vorhandensein von Flüssigkeit feststellt, z.B. nachdem die leere Einwegverpackung 2 gegen eine volle Verpackung ausgetauscht wurde.

Selbstverständlich ist es auch möglich, die Entnahmeeinrichtung zur Aufnahme von mehreren Einwegverpackungen 2 in entnahmebereiter Lage auszubilden, wobei mindestens die Auslässe 36 von zwei Verpackungen auf die gleiche Entnahmestelle gerichtet sind. Dabei kann die Ueberwachungsvorrichtung die Entnahme aus der zweiten Verpackung einleiten, wenn die erste Verpackung erschöpft ist. Anstelle einer gekühlten Basisplatte 60 kann die Entnahmeeinrichtung auch eines oder mehrere gekühlte Einschubfächer für Einwegverpackungen aufweisen, um den Inhalt während der Verbrauchszeit frisch zu halten.

Aus dem Vorstehenden ergibt sich, dass das Auswechseln der Einwegverpackung in einer Entnahmeeinrichtung auf sehr einfache Weise und ohne unbeabsichtigtes Ausfliessen von Beutelinhalt erfolgen kann, da das Ueberdruckventil 50 ausser bei einer gewollten Entleerung geschlossen bleibt und keine Verbindungen mit flüssigkeitsführenden Leitungen hergestellt werden müssen.

Sofern dies erwünscht ist, kann die Entnahmeeinrichtung in bezug auf die Portionengrösse bzw. Flüssigkeitsmenge, welche bei einem Entnahmevorgang abgegeben wird, einstellbar ausgebildet sein.

Dies lässt sich entweder dadurch erreichen, dass der am Auspresskolben 72 vorgesehene Kopf 73 nicht starr sondern z.B. um eine an seinem oberen Rand verlaufende horizontale Achse schwenkbar und in seiner Schwenklage einstellbar angeordnet ist. Entsprechend der Neigung des Kopfes 73 wird dementsprechend eine grössere oder kleinere Flüssigkeitsmenge aus der Dosierkammer 32 ausgepresst. Die gleiche Wirkung lässt sich dadurch erreichen, dass der Hub des Anpresskolbens 72 so verändert wird, dass dieser sich näher oder weniger nahe an die Gegenplatte 66 heranbewegt.

Die Ausgestaltung des Entnahmekanales 30 in einem Schlauch aus gummielastischem Material hat nicht nur den Vorteil, dass dessen Elastizität nicht nur für die Funktion des Ueberdruckventiles herangezogen werden kann, sondern dieses gestattet auch, den Schlauch durch den Abquetschbolzen zuverlässig dichtend abzusperren, um ein Rückströmen von Flüssigkeit aus der Dosierkammer 4 beim Auspressen derselben zu verhindern. Im Bereiche des Schlauches, in welchem die Dosierkammer 32 gebildet wird, ist ein elastisches Verhalten allerdings nicht von Vorteil. Wenn der Entleerungsdruck im Beutel nicht konstant ist, kann sich das Volumen der Dosierkammer entsprechend veränderen und zu Dosierfehlern führen. Es ist deshalb vorteilhaft, den Schlauch in dessen die Dosierkammer 32 begrenzendem Teil zwar flexibel aber unelastisch oder weniger elastisch als in den übrigen Teilen auszugestalten.

Dies kann beispielsweise dadurch erreicht werden, dass in jenem Teil die Wandstärke vergrössert oder aber einunelastischer Mantel oder eine Gewebeeinlage vorgesehen wird.

Die in Fig. 3 dargestellte Lage der Teile kann bei einer alternativen Betriebsweise der Einrichtung auch selbst die Ausgangslage repräsentieren, wobei die Dosierkammer 32 noch leer ist, da der Abquetschbolzen 74 den Entnahmekanal 30 noch nicht freigegeben hat. Dies hat den Vorteil, dass die Flüssigkeit in dem durch die Basisplatte 60 gekühlten Bereich zurückgehalten wird, bis eine neue Entnahme stattfindet.

**Patentansprüche**

1. Einwegverpackung (2) für Flüssigkeiten, insbesondere für die Automatenzubereitung von Getränken aus Extrakten, mit einem Speicherraum (20), der von einem Beutel (19) begrenzt ist, der seinerseits in einer Verpackungsschachtel (4) angeordnet ist und mit einem den Speicherraum mit einem Auslass (36) verbindenden Entnahmekanal (30), der eine Dosierkammer (32) aufweist, wobei der Speicherraum (20) und die Dosierkammer (32) zur Entnahme von Flüssigkeit auspressbar ausgebildet sind und die Dosierkammer (32) ausschliesslich mit dem Speicherraum (20) und dem Auslass (36) verbunden ist, dadurch gekennzeichnet, dass die Verpackungsschachtel (4) flach ausgebildet ist und an ihren Schmalseiten (6) je einen Längsfalz (7) aufweist.

2. Einwegverpackung nach Anspruch 1, dadurch gekennzeichnet, dass der Entnahmekanal (30) ein der Dosierkammer (32) nachgeschaltetes, in Richtung des Auslasses (36) öffnendes Ueberdruckventil (50) besitzt.

3. Einwegverpackung nach Anspruch 1, dadurch gekennzeichnet, dass der den Speicherraum (20) begrenzende Beutel (18) aus Folienmaterial ausgebildet ist, an den ein den Entnahmekanal (30) bildender Schlauch (24) angeschlossen ist.

4. Einwegverpackung nach Anspruch 3, dadurch gekennzeichnet, dass das Ueberdruckventil (50) einen Zapfen (40) im Entnahmekanal (30) aufweist, der dessen Querschnitt absperrt, wobei die Wandung des mindestens in diesem Bereich gummielastischen Schlauches (24) unter Ueberdruck in der Dosierkammer (32) vom Zapfen abhebbar ist.

5. Einwegverpackung nach Anspruch 4, dadurch gekennzeichnet, dass der Zapfen (40) Teil eines im Schlauch (24) befestigten Einsatzes (38) bildet.

6. Einwegverpackung nach Anspruch 5, dadurch gekennzeichnet, dass der Einsatz (38) einen mit dem Zapfen (40) starr verbundenen Fussteil (42) aufweist, der Durchbrüche (44) besitzt und von einem Wulst des Schlauches am Auslass (36) untergriffen ist.

7. Einwegverpackung nach Anspruch 3, dadurch gekennzeichnet, dass der Schlauch (24) unterhalb einer Aufreissöffnung (10) in einer Breitseite (5) der Schachtel (4) am Beutel (18) befestigt ist.

## Claims

1) A disposable packing (2) for liquids, in particular for the preparation of drinks from extracts in automatic machines with a storage compartment (20) delimited by a bag (19) which is in turn disposed in a packing box (4) and with a draughting duct (30) which joins the storage compartment with an outlet (36) and which has a dosage chamber (32), the storage compartment (20) and the dosage chamber being designed so that they can be compressed for the draughting of liquids and the dosage chamber (332) being exclusively connected with the storage compartment (20) and the outlet compartment (36), characterised in that the packing box (4) is given a flat shape and has, on its narrow sides (6), one longitudinal fold (7) each.

2) A disposable packing according to Claim 1, characterised in that the draughting duct (30) has an excess pressure valve (50) disposed downline from the dosage chamber (32), opening in the direction of the outlet (36).

3) A disposable packing according to Claim 1, characterised in that the bag (18) delimiting the storage compartment (20) is made of a sheeting material to which a hose (24) is connected which forms the draughting duct (30).

4) A disposable packing according to Claim 3, characterised in that the excess pressure valve (50) has a plug (40) in the draughting channel (30) which shuts off its cross section, the wall of the hose (24) being made of elastic rubber at least in this zone being detachable from the plug under excess pressure in the dosage chamber (32).

5) A disposable packing according to Claim 4, characterised in that the plug (40) forms part of an insert (38) fixed in the hose (24).

6) A disposable packing according to Claim 5, characterised in that the insert (38) has a foot (42) rigidly connected to the plug (40) which has openings (44) and is gripped from below by a bulge of the hose at the outlet (36).

7) A disposable packing according to Claim 3, characterised in that the hose (24) is fastened to the bag (18) below a tear-apart opening (10) in a wide side (5) of the box (4).

## Revendications

1. Emballage perdu (2) pour liquides, notamment pour la préparation de boissons à partir d'extraits par un distributeur automatique de boissons, comportant un espace réservoir (20) délimité par un sac (18) disposé dans une boîte d'emballage (4), et un canal de prélèvement (30) reliant ledit espace réservoir à un orifice de sortie (36) et comportant une chambre de dosage (32), l'espace réservoir (20) et la chambre de dosage (32) pouvant être comprimés pour prélever du liquide, la chambre de dosage (32) étant reliée uniquement à l'espace réservoir (20) et à l'orifice de sortie (36), caractérisé en ce que la boîte d'emballage (4) a une forme plate et comporte un pli longitudinal (7) sur chacun deses petits côtés (6).

2. Emballage perdu selon la revendication 1, caractérisé en ce que le canal de prélèvement (30) comporte une soupape de sûreté (50) disposée en aval de la chambre de dosage (32) et s'ouvrant dans la direction de l'orifice de sortie (36).

3. Emballage perdu selon la revendication 1, caractérisé en ce que le sac (18) qui délimite l'espace réservoir (20) est formé d'un matériau en feuille auquel un tuyau flexible (24) formant le canal de prélèvement (30) est raccordé.

4. Emballage perdu selon la revendication 3, caractérisé en ce que la soupape de sûreté (50) comporte un bouchon (40) disposé dans le canal de prélèvement (30) dont il ferme la section de passage, la paroi du tuyau flexible (24) élastique comme du caoutchouc au moins dans cette zone pouvant être écartée du bouchon (40) sous l'action de la surpression qui règne dans la chambre de dosage (32).

5. Emballage perdu selon la revendication 4, caractérisé en ce que le bouchon (40) fait partie d'une pièce intérieure (38) fixée dans le tuyau flexible (24).

6. Emballage perdu selon la revendication 5, caractérisé en ce que la pièce intérieure (38) comporte une partie inférieure (42) liée rigidement au bouchon (40), comportant des passages (44) et un bourrelet du tuyau flexible (24) étendant audessous de cette partie au niveau de l'orifice de sortie (36).

7. Emballage perdu selon la revendication 3, caractérisé en ce que le tuyau flexible (24) est fixé au sac (18) sous une ouverture prédécoupée (10) prévue dans un grand côté (5) de la boîte (4).

*Fig. 1*

Fig. 2

Fig. 2a

Fig. 2 b

Fig. 3